# EUROPEAN PATENT APPLICATION

(11) **EP 3 786 748 A1**
(43) Date of publication of application: **03.03.2021**
(21) Application number: 19791478.1
(22) Date of filing: 18.01.2019
(51) Int. Cl.: G05B 23/02

(54) **FAULT INDICATOR DIAGNOSTIC SYSTEM AND FAULT INDICATOR DIAGNOSTIC METHOD**

(30) Priority: 23.04.2018 JP 2018082178
(71) Applicant: Hitachi, Ltd., Tokyo 100-8280 (JP)
(72) Inventor: FUJIMOTO, Shohei, Tokyo 100-8280 (JP); ODAKA, Toshiyuki, Tokyo 100-8280 (JP); NOGUCHI, Junji, Tokyo 100-8280 (JP)
(74) Representative: MERH-IP Matias Erny Reichl Hoffmann Patentanwälte PartG mbB
(86) International application number: PCT/JP2019/001441
(87) International publication number: WO 2019/207855

(57) **Abstract**

An objective of the present invention is to provide a fault indicator diagnostic system and fault indicator diagnostic method with which a fault indicator of a machine can be more accurately diagnosed. Provided is a fault indicator diagnostic system comprising: an operation sensor data table which indicates an association between sensor data and an acquisition time of the sensor data; an operation mode data table which indicates an association between an operation mode and a time of operation in the operation mode; and an operation data table created by merge processing the operation sensor data table and the operation mode data table and comprising the sensor data with regard to the operation mode at a given time. The system compares, in a given operation mode, a threshold determined on the basis of a diagnostic model created by learning from normal sensor data with a value computed on the basis of the diagnostic model from the sensor data to be diagnosed, and determines whether a malfunction is occurring.

## Description

### [Technical Field]

The present invention relates to a fault indicator diagnostic system and a fault indicator diagnostic method, and more particularly relates to a fault indicator diagnostic system and a fault indicator diagnostic method capable of diagnosing a fault indicator of a machine based on an operation mode. It should be noted that the fault indicator diagnosis in the present invention can also be referred to as fault indicator detection or fault prediction.

### [BACKGROUND OF THE INVENTION]

In industrial machinery or the like, faults cause decreases in operation efficiency, and when a serious fault occurs, this can cause the occurrence of serious accidents. For this reason, it is important to predict faults with greater accuracy, and conventional techniques for this purpose exist.

For example, Patent Document 1 describes a fault prediction system that includes a machine learning device that enables accurate fault prediction in accordance with the circumstances. Patent Document 2 discloses an abnormality indicator diagnostic device for diagnosing the presence or absence of an abnormality indicator in mechanical equipment with high accuracy.

### [Citation List]

### [Patent Document]

[Patent Document 1] Japanese Patent Application Laid-Open Publication No. 2017-33526
[Patent Document 2] Japanese Patent Application Laid-Open Publication No. 2016-33778

### [Summary of Invention]

### [Technical Problem]

However, conventionally, since the fault indicators of industrial machines or the like are not diagnosed in accordance with the operation mode, there are cases in which fault indicators cannot be diagnosed accurately if the operation mode is different. For example, when the threshold value of a sensor is increased, there are operation modes in which the sensor cannot be diagnosed as "abnormal" even though the value is actually abnormal. In addition, if the threshold value of the sensor is lowered, there are operation modes in which the sensor is diagnosed as "abnormal" even though the value is actually normal.

In Patent Document 1, a system for performing fault indication based on sensor data and control software is described, but a plurality of models for each operation mode are not explicitly distinguished, and it is unclear with which model the diagnosis is performed. Further, Patent Document 2 describes a system for performing fault indication with respect to a machine or equipment in which a predetermined operation schedule is repeated, but this system cannot be applied to a case in which the operation schedule is irregular.

In view of the above problems, it is an object of the present invention to provide a fault indicator diagnostic system and a fault indicator diagnostic method capable of more accurately diagnosing a fault indicator of a machine.

### [Means for Solving the Problems]

In order to achieve the above object, one representative fault indicator diagnostic system of the present invention includes an operation sensor data table that indicates an association between sensor data and an acquisition time of the sensor data; an operation mode data table that indicates an association between an operation mode and an operation time in the operation mode; and an operation data table created by merge processing the operation sensor data table and the operation mode data table and that includes the sensor data with respect to the operation mode at a given time; wherein the fault indicator diagnostic system compares, in a given operation mode, a threshold value determined based on a diagnostic model created by learning from normal sensor data with a value computed based on a diagnostic model from sensor data that serves as a diagnostic target, and determines whether or not an abnormality is present.

### [Advantageous Effects of Invention]

According to the present invention, in the fault indicator diagnostic system and the fault indicator diagnostic method, it is possible to more accurately diagnose the fault indicators of a machine.

Other problems, configurations and effects other than those described above will be made apparent by the following description of the embodiments.

### [Brief Description of Drawings]

[Figure 1] FIG. 1 is a block diagram illustrating an embodiment of the fault indicator diagnostic system of the present invention.
[Figure. 2] FIG. 2 is a diagram illustrating an example of the processing of the learning/diagnostic system in the fault indicator diagnostic system of the present invention.
[Figure 3] FIG. 3 is a diagram illustrating an example of an operation mode data output process flow in the fault indicator diagnostic system of the present invention.
[Figure 4] FIG. 4 is a diagram illustrating an example of an operation sensor data output process flow in the fault indicator diagnostic system of the present invention.
[Figure 5] FIG. 5 is a diagram illustrating an example of a data merge process flow in the fault indicator diagnostic system of the present invention.
[Figure 6] FIG. 6 is a diagram illustrating an example of an operation mode determination process flow in the fault indicator diagnostic system of the present invention.
[Figure 7] FIG. 7 is a diagram illustrating an example of a learning process flow in the fault indicator diagnostic system of the present invention.
[Figure 8] FIG. 8 is a diagram illustrating an example of a diagnostic process flow in the fault indicator diagnostic system of the present invention.
[Figure 9] FIG. 9 is a diagram illustrating an example of an abnormality notification process flow in the fault indicator diagnostic system of the present invention.
[Figure 10] FIG. 10 is a diagram illustrating an example of an operation mode data table in the fault indicator diagnostic system of the present invention.
[Figure 11] FIG. 11 is a diagram illustrating an example of an operation sensor data table in the fault indicator diagnostic system of the present invention.
[Figure 12] FIG. 12 is a diagram illustrating an example of an operation data table in the fault indicator diagnostic system of the present invention.
[Figure 13] FIG. 13 is a diagram illustrating an example of a diagnostic model table in the fault indicator diagnostic system of the present invention.
[Figure 14] FIG. 14 is a diagram illustrating an example of a diagnosis result storage table in the fault indicator diagnostic system of the present invention.
[Figure 15] FIG. 15 is a diagram illustrating an example of an abnormality data table in the fault indicator diagnostic system of the present invention.

### [Description of Embodiment(s)]

Embodiments for carrying out the present invention will be described.

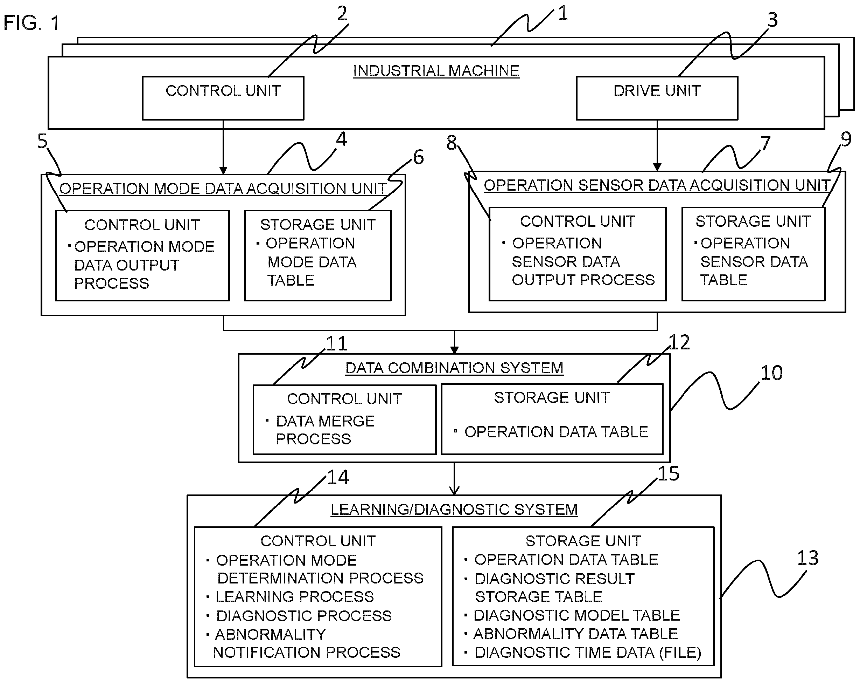

FIG. 1 is a block diagram illustrating an embodiment of the fault indicator diagnostic system of the present invention. The fault indicator diagnostic system is a system for diagnosing a fault indicator of an industrial machine 1, and includes an operation mode data acquisition unit 4, an operation sensor data acquisition unit 7, a data combination system 10, and a learning/diagnostic system 13. Each of these may be configured independently, or may be configured as an integral unit, for example, as a single device.

The industrial machine 1 includes a variety of machines, such as machine tools, robots, machines for welding, and the like. The number of industrial machines 1 may be plural, and in this case, a fault indicator can be diagnosed for each industrial machine. The industrial machine 1 is configured to drive a drive unit 3 by the control of a control unit 2, and the drive unit 3 may be implemented as a motor, an electromagnetic solenoid, a cylinder (hydraulic, pneumatic, or the like), an engine, or the like, for example. Further, the industrial machine 1 is provided with sensors for acquiring information related to the driving of the drive unit 3. The sensors can be implemented as a variety of sensors, such as a current sensor, a voltage sensor, a vibration sensor, a temperature sensor, a pressure sensor, a torque sensor, or the like. In addition, the industrial machine 1 is provided with a device for outputting information regarding the operation mode. This function may be provided in the control unit 2.

The operation mode data acquisition unit 4 includes a control unit 5 and a storage unit 6. The control unit 5 of the operation mode data acquisition unit 4 acquires data (operation mode data) relating to the operation mode from the industrial machine 1 (the control unit 2 or the like), creates an operation mode data table, records it in the storage unit 6, and outputs this information to the data combination system 10.

Here, the operation modes will be described. The operation mode indicates the type of operating state in which the drive unit 3 of the industrial machine 1 is currently being driven. For example, in the case of a machine tool, the operation mode can be divided into a state in which machining such as cutting is actually being performed, a processing operation preparation state in which machining is not performed, or a state in which a blade is being moved, or the like. In addition, with regard to cutting, it is also possible to divide the operation mode for each material, for each workpiece shape (for example, straight lines and curved lines), for each cutting method or the like. In addition, in the case of a robot, even if it is in operation, the operation state can be divided into a state in which an arm is carrying an object, a state in which the arm is not carrying an object, a state in which the robot is moving only by the arm, a state in which the robot is in standby, or the like. In this way, the operation mode can be divided into a variety of states. In particular, it is effective to divide into modes (operating states) for each different load on the drive unit 3; for example it is possible to divide the operation modes into a state in which the robot is in contact with a target object during operation and a state in which the robot is not in contact with the target object. The operation mode is information which distinguishes these by numbers, letters, symbols, or the like and classifies them.

The operation sensor data acquisition unit 7 includes a control unit 8 and a storage unit 9. The control unit 8 acquires data (operation sensor data) from the above-described sensors of the industrial machine 1, creates an operation sensor data table and records it in the storage unit 9, and outputs the information to the data combination system 10. It is also possible to acquire data from a plurality of sensors as the data (sensor values) from the sensors.

The data combination system 10 includes a control unit 11 and a storage unit 12. The control unit 11 combines the operation mode data table from the operation mode data acquisition unit 4 and the operation sensor data table from the operation sensor data acquisition unit 7, performs a data merge process, and creates an operation data table. The operation data table is recorded in the storage unit 12 and this information is output to the learning/diagnostic system 13.

The learning/diagnostic system 13 includes a control unit 14 and a storage unit 15. The control unit 14 acquires the operation data table from the data combination system 10 and performs an operation mode determination process, a learning process, a diagnostic process , and an abnormality notification process. Then, the learning/diagnostic system 13 records, to the storage unit 15, the operation data table, the diagnostic result storage table, the diagnostic model table, the abnormality data table, and the diagnostic time data (file).

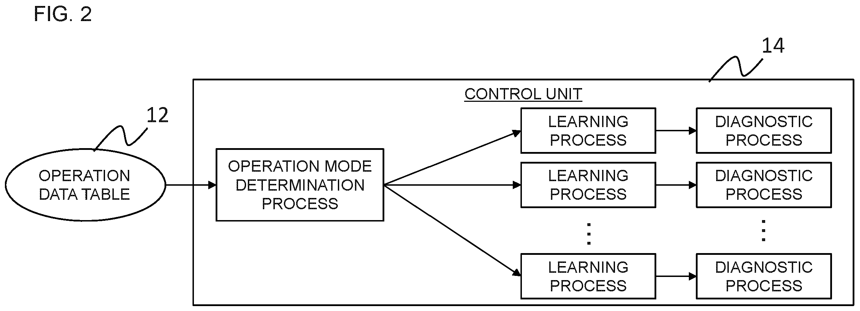

FIG. 2 is a diagram illustrating an example of the processing of the learning/diagnostic system 13 in the fault indicator diagnostic system of the present invention. As illustrated in FIG. 2, the operation mode determination process is performed based on the operation data table. Then, the learning process and the diagnostic process are performed for each operation mode. In this way, it is possible to diagnose a fault indicator for each operation mode.

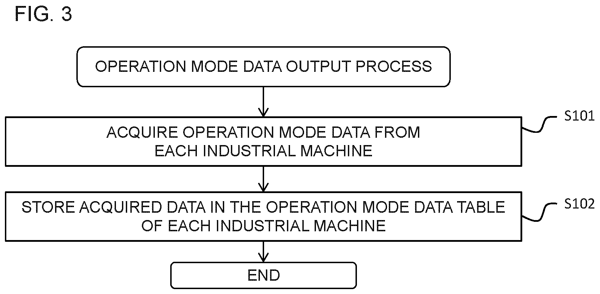

FIG. 3 is a diagram illustrating an example of an operation mode data output process flow in the fault indicator diagnostic system of the present invention. The processing here illustrates the process performed by the control unit 5 (see FIG. 1) of the operation mode data acquisition unit 4. First, the operation mode data is acquired from the industrial machine 1 (S101). Then, the acquired data is stored in the operation mode data table for the industrial machine 1 (S102). The operation mode data table stores the operation mode for each time (timestamp). The time here can be acquired at a fixed interval, for example, every second or the like. In this way, an operation mode data table is created for each industrial machine 1.

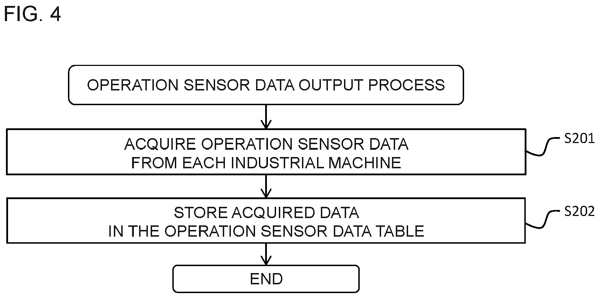

FIG. 4 is a diagram illustrating an example of an operation sensor data output process flow in the fault indicator diagnostic system of the present invention. The processing here illustrates the process performed by the control unit 8 (see FIG. 1) of the operation sensor data acquisition unit 7. First, the operation sensor data is acquired from the industrial machine 1 (S201). Then, the acquired data is stored in the operation sensor data table (S202). In the operation sensor data table, the value of the sensor is stored for each time (time stamp). The time here can be acquired at the same fixed interval as in FIG. 3, for example, every second or the like. In this way, an operation sensor data table is created for each industrial machine 1.

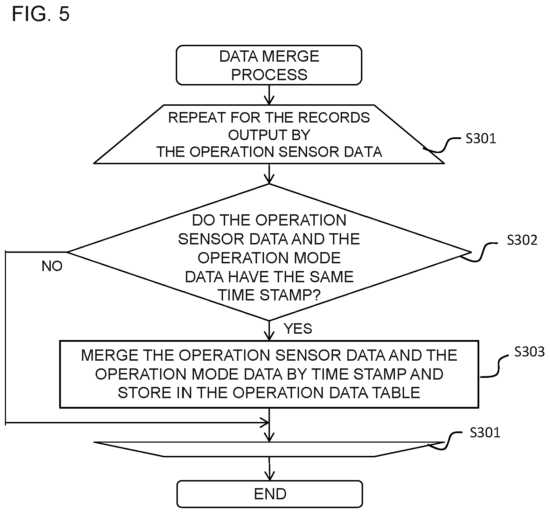

FIG. 5 is a diagram illustrating an example of a data merge process flow in the fault indicator diagnostic system of the present invention. The processing here illustrates the process performed by the control unit 11 of the data combination system 10 (see FIG. 1).

First, processing is repeated for the records output by the operation sensor data (S301). The operation sensor data is included in the operation sensor data table output by the operation sensor data acquisition unit 7, and is stored for each time (time stamp). Next, it is determined whether or not the time stamps of the operation sensor data and the operation mode data are the same (S302). If it is determined in S302 that the time stamps are the same, the operation sensor data and the operation mode data are merged by that time stamp and stored in the operation data table (S303). As a result, the operation data table stores the value of the sensor, the operation mode, the unit of the industrial machine 1, and the like for each time stamp. In this way, the value of the sensor is associated with the operation mode. On the other hand, if it is determined at S302 that the time stamps are not the same, the process proceeds to S301 and repeats the above-described process from S302 up to the number of records. The time stamp indicates the time at that moment, and may include, as a specific example, the year, the month, the day, the hour, the minute, and the second.

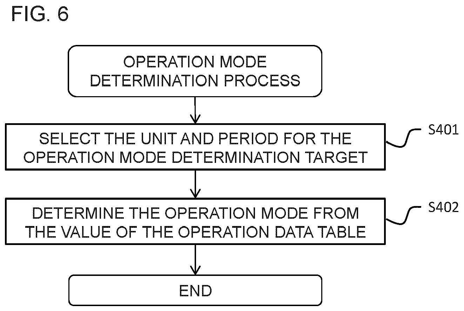

FIG. 6 is a diagram illustrating an example of an operation mode determination process flow in the fault indicator diagnostic system of the present invention. The processing here illustrates the process performed by the control unit 14 of the learning/diagnostic system 13 (see FIG. 1). First, the unit and the period of the operation mode determination target are selected (S401). Here, the unit is the unit for each industrial machine 1. With regard to the period, all the periods may be selected automatically, or a specific period may be manually designated. Next, the operation mode is determined from the value of the operation data table (S402). Since the operation data table contains information on the operation mode, it is possible to determine the operation mode for the selected period.

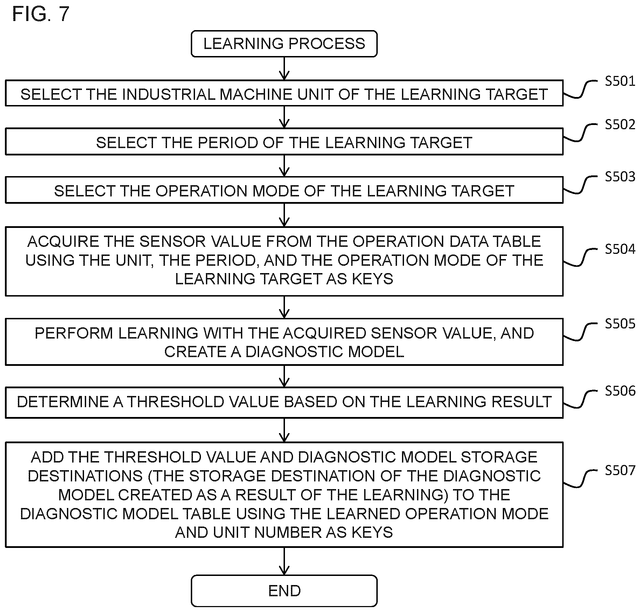

FIG. 7 is a diagram illustrating an example of a learning process flow in the fault indicator diagnostic system of the present invention. The processing here illustrates the process performed by the control unit 14 of the learning/diagnostic system 13 (see FIG. 1).

First, the industrial machine unit number of the learning target is selected(S501). The selection here may be performed automatically to select all the units, or may be performed by the user to select a particular unit. The industrial machine corresponds to the industrial machine in FIG. 1.

Next, the period of the learning target is selected (S502). Here, the selection is made by selecting a period during which the unit selected by the user in S501 is operating normally.

Next, the operation mode of the learning target is selected (S503). For this selection, all the operation modes recorded in the operation data table may be automatically selected for the unit selected in S501. In addition, the user may manually select a particular operation mode for the unit selected in S501.

Next, sensor values are acquired from the operation data table by using the unit, the period, and the operation mode of the learning target as keys (S504). The learning target unit is selected in S501, the learning target period is selected in S502, and the learning target operation mode is selected in S503. The sensor value is the data of the sensor included in the operation data table.

Next, learning is performed with the acquired sensor value and a diagnostic model is created (S505). As described above, the selected sensor value is a sensor value for a unit, a period, and an operation mode that are normally operating. For this reason, the diagnostic model is created as a model illustrating the range of sensor values in which the target unit is operating normally for each selected operation mode.

Next, a threshold value is determined based on the learning result (S506). Here, a threshold value for determining an abnormality of a process to be described later is determined with respect to the diagnostic model. Here, the threshold value can be determined by the diagnostic model. That is, the threshold value can be specified by an appropriate method based on the range of normal values specified by the diagnostic model. In addition, since a diagnostic model is created for each operation mode, it is possible to determine an appropriate threshold value in accordance with the operation mode.

Next, the threshold value and diagnostic model storage destinations (the storage destination of the diagnostic model created as a result of the learning) are added to the diagnostic model table using the learned operation mode and the unit number as keys (S507). In the case that the diagnostic model is saved as file data, the diagnostic model storage destination can be added to the diagnostic model table. At this time, the operation mode, the unit number, the threshold value, and the like are recorded in the diagnostic model table.

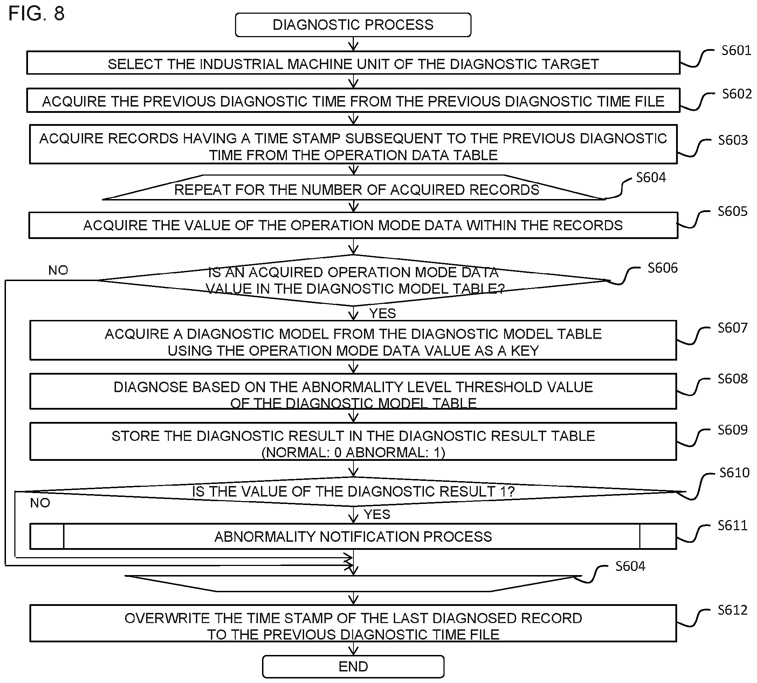

FIG. 8 is a diagram illustrating an example of a diagnostic process flow in the fault indicator diagnostic system of the present invention. The processing here illustrates the process performed by the control unit 14 of the learning/diagnostic system 13 (see FIG. 1).

First, the industrial machine unit of the diagnostic target is selected (S601). The industrial machine unit is selected automatically. The industrial machine corresponds to the industrial machine in FIG. 1.

Next, the previous diagnostic time is acquired from the previous diagnostic time file (S602). The diagnostic time file is a file containing data of the last previous diagnostic time (date and time) of the target unit. The previous diagnostic time acquired here is the last previous diagnostic time of the target unit. It should be noted that the diagnostic time file may not be a file but may simply be handled as data.

Next, records having a time stamp subsequent to the previous diagnostic time are acquired from the operation data table (S603). Since the last previous diagnostic time is known from the data acquired in S602, the data (records) recorded for each time stamp subsequent to the last previous diagnostic time is acquired.

Next, S605∼S611 are repeated for the number of acquired records (S604). The number of records is equal to the number of timestamps recorded.

Next, the value of the operation mode data within the records is acquired (S605). Here, the records are records of the operation data table.

Next, it is determined whether or not there is an operation mode data value acquired in S603 in the diagnostic model table (S606). Here, the diagnostic model table is created by the process of FIG. 7, and is created for each operation mode. For this reason, it is determined whether or not the diagnostic model table contains data for the same operation mode as the operation mode of the record acquired by S603.

In the case that it is determined in S606 that the diagnostic model table has an operation mode data value acquired in S603, the diagnostic model is acquired from the diagnostic model table using the operation mode data value as a key (S607). That is, in the case that there is a diagnostic model with the same operation mode as the operation mode in the record acquired by S603, that diagnostic model is acquired.

Next, a diagnosis is performed based on the abnormality level threshold value of the diagnostic model table (S608). The abnormality level threshold value here is the threshold value determined in S506 of FIG. 7. The target sensor data is diagnosed as being in a normal range or in an abnormal range by comparing the threshold value with the target sensor data. The comparison here can be performed by comparing the above threshold value and a value calculated based on the diagnostic model from the target sensor data in the same operation mode.

Next, the diagnostic result is stored in the diagnostic result table (Normal: 0, Abnormal: 1) (S609). Here, for example, in the case that the result is normal, "0" is stored in the diagnostic result table, and in the case that the result is abnormal, "1" is stored in the diagnostic result table. In the diagnostic result table, information such as the time (time stamp), the sensor value, the operation mode, and the unit number are stored together with the diagnostic result.

Next, it is determined whether the value of the diagnostic result is abnormal ("1") or not (S610). In the case that it is abnormal, the abnormality notification process is performed (S611).

It should be noted that, in the case that it is determined in S606 that there are no operation mode data values acquired in S603 in the diagnostic model table, or in the case that it is determined in S610 that the operation mode data values are not abnormal, the processing starting from S605 is performed on the next record (S604).

Then, when the repeated processing for all the records has completed, the timestamp of the last diagnosed record is overwritten to the previous diagnostic time file (S612). This becomes the newest diagnostic time file.

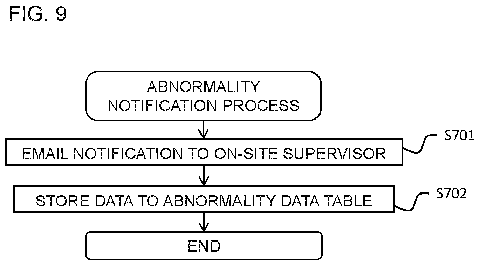

FIG. 9 is a diagram illustrating an example of an abnormality notification process flow in the fault indicator diagnostic system of the present invention. Here, the abnormality notification process in S611 of FIG. 8 will be described in detail. The abnormality notification process sends an email notification to the on-site supervisor (S701) and stores the data in the abnormality data table (S702). The email notification to the supervisor may be automatically notified to a previously registered email address. In addition, the abnormality data table is a table that adds only data that has been determined to be abnormal, and records the time, the operation mode, the unit number, and the like. In addition, the abnormality level may be recorded as necessary.

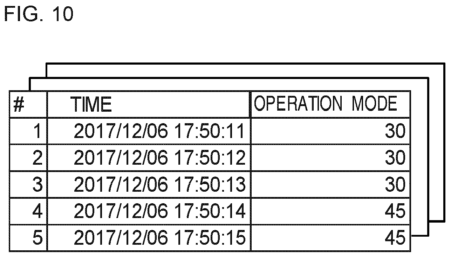

FIG. 10 is a diagram illustrating an example of an operation mode data table in the fault indicator diagnostic system of the present invention. The operation mode data table is a table created by the operation mode data acquisition unit 4 (see FIG. 1). An example of the process is illustrated in FIG. 3.

In the operation mode data table illustrated in FIG. 10, the number (#), time (time stamp), and operation mode are recorded. Here, the operation mode is indicated by a number, and in the example shown in the figure, the numbers of the operation modes are "30" and "45". This illustrates an example in which the information regarding the type of operation mode is represented by a number. If the numbers are the same, the operation mode is the same. It should be noted that it is also possible to indicate the operation mode using symbols or characters other than numbers. In FIG. 10, an operation mode data table is created for each industrial machine.

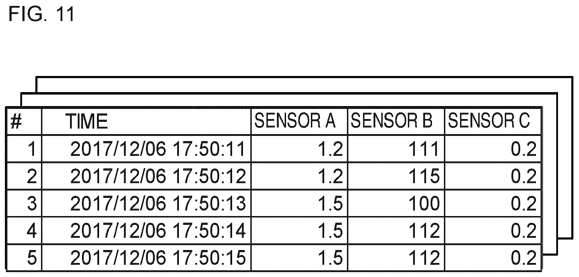

FIG. 11 is a diagram illustrating an example of an operation sensor data table in the fault indicator diagnostic system of the present invention. The operation sensor data table is a table created by the operation sensor data acquisition unit 7 (see FIG. 1). An example of the process is illustrated in FIG. 4.

In the operation sensor data table illustrated in Fig. 11, the number (#), the time (time stamp), the value of sensor A, the value of sensor B, and the value of sensor C are recorded. The sensors here illustrate an example based on three sensors, and these values illustrate examples that assume current and voltage values. For example, by measuring the current and voltage of the motor or the like of the drive unit, it is possible to diagnose fault indicators from these values. In FIG. 11, an operation sensor data table is created for each industrial machine.

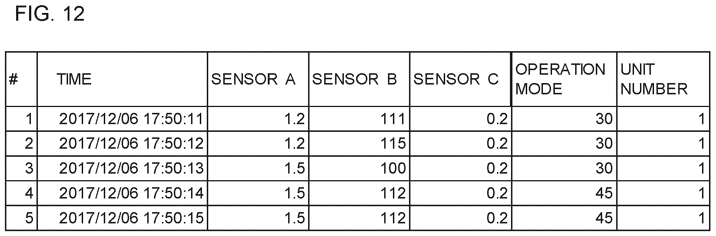

FIG. 12 is a diagram illustrating an example of an operation data table in the fault indicator diagnostic system of the present invention. The operation data table is a table created by the data combination system 10 (see FIG. 1). An example of the process is illustrated in FIG. 5.

In the operation data table illustrated in FIG. 12, the number (#), the time (time stamp), the value of the sensor A, the value of the sensor B, the value of the sensor C, the operation mode, and the unit number are recorded. This illustrates an example in which the operation mode data table of FIG. 10 and the operation sensor data table of FIG. 11 are combined at the same time (time stamp) of the same unit number. This makes it possible to associate the values of each sensor with the operation mode. It should be noted that the unit number is a number for specifying the industrial machine.

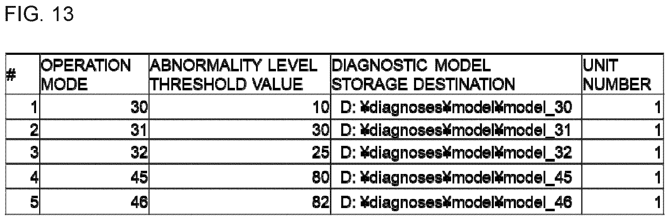

FIG. 13 is a diagram illustrating an example of a diagnostic model table in the fault indicator diagnostic system of the present invention. The diagnostic model table is a table created by the learning/diagnostic system 13 illustrated in FIG. 1. An example of the process is illustrated in FIG. 7.

In the diagnostic model table of FIG. 13, a number (#), an operation mode, an abnormality level threshold value, a diagnostic model storage destination, and a unit number are recorded. The diagnostic model is a diagnostic model created by S505 in FIG. 7. The table in Figure 13 illustrates the storage destination of the file. The abnormality level threshold value is the threshold value determined in S506 in FIG. 7. It should be noted that the diagnostic model table is recorded in association with the operation mode. For example, the operation mode "30" is a processing operation preparation, and the operation mode "31" is in-process, or the like, such that the operation mode distinguishes the state of the operation of the industrial machine 1.

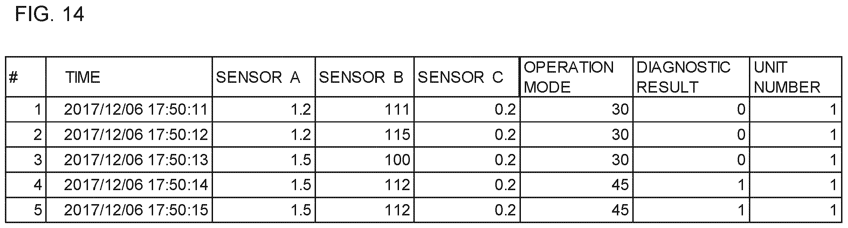

FIG. 14 is a diagram illustrating an example of a diagnostic result storage table in the fault indicator diagnostic system of the present invention. The diagnostic result storage table is a table created by the learning/diagnostic system 13 (see FIG. 1). An example of the process is illustrated in FIG. 8.

The diagnostic result storage table illustrated in Fig. 14 records the number (#), the time (time stamp), the value of sensor A, the value of sensor B, the value of sensor C, the operation mode, the diagnostic result, and the unit number. That is, the diagnostic result storage table of FIG. 14 has a configuration in which the diagnostic results are added to the operation mode data table of FIG. 12. Here, the diagnostic results illustrate an example in which "0" is normal and "1" indicates an anomaly, and this data is stored in S609 in FIG. 8. By recording the diagnostic result in association with the operation mode and the unit number, it becomes possible for the user to comprehend the diagnostic result for the operation mode in an easy-to-understand manner.

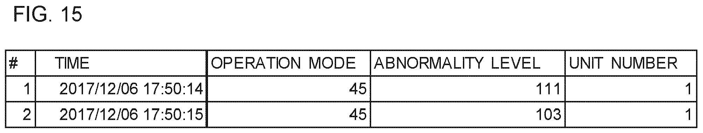

FIG. 15 is a diagram illustrating an example of an abnormality data table in the fault indicator diagnostic system of the present invention. The abnormality data table is a table created by the learning/diagnostic system 13 (see FIG. 1). An example of the process is illustrated in FIG. 9.

In the abnormality data table of FIG. 15, the number (#), the operation mode, the abnormality level, and the unit number are recorded. Here, the abnormality data table of FIG. 15 is formed by extracting only those values that have a diagnostic result of "1" (abnormal) from among the diagnostic result storage tables of FIG. 14. Here, the abnormality level indicates the degree of the abnormality level threshold value of the diagnostic model table of Fig. 13 with respect to the sensor values of the diagnostic result storage table of FIG. 14, and indicates that the higher the value, the higher the degree of abnormality (the sensor value is farther on the abnormal side than the threshold value). By creating the abnormality data table in this way, it is possible to collectively comprehend the state of the abnormality with respect to the operation mode.

As described above, according to the present embodiment, the operation mode of an industrial machine is determined, and a learning process is performed for each operation mode, thereby making it possible to perform fault indicator diagnostics that are appropriate for each operation mode. Also, by determining that a value of a sensor is abnormal for each operation mode, diagnostics that more accurately predict the fault of industrial machines become possible. In addition, since the normal state is learned for each operation mode and diagnostics are performed based on the learned normal state, more accurate fault indicator diagnostics become possible. In addition, since it becomes clear what kind of diagnostic model is used for each operation mode, this can be applied to the same industrial machines that use the same methods, and lateral deployment is facilitated.

It should be noted that the present invention is not limited to the above-described embodiments, and various modifications are included. For example, the above-described embodiments have been described in detail for the purpose of conveniently illustrating the present invention, and are not necessarily limited to the entirety of the described configurations. In addition, it is also possible to replace a portion of the configuration of one embodiment with the configuration of another embodiment, and it is also possible to add the configuration of one embodiment to the configuration of another embodiment. In addition, it is possible to add, delete, or replace a portion of the configuration of each embodiment.

For example, the present invention can be applied not only to industrial machines but also to general machines that require fault diagnostics.

### [Description of Symbols]

1... Industrial Machine, 2... Control Unit, 3... Drive Unit, 4... Operation Mode Data Acquisition Unit, 5... Control Unit, 6... Storage Unit, 7... Operation Sensor Data Acquisition Unit, 8... Control Unit, 9... Storage Unit, 10... Data Combination System, 11... Control Unit, 12... Storage Unit, 13.. Learning/Diagnostic System, 14... Control Unit, 15.. Storage Unit

## Claims

1. A fault indicator diagnostic system comprising:
an operation sensor data table that indicates an association between sensor data and an acquisition time of the sensor data;
an operation mode data table that indicates an association between an operation mode and an operation time in the operation mode; and
an operation data table created by merge processing the operation sensor data table and the operation mode data table and that includes the sensor data with respect to the operation mode at a given time;
wherein:
the fault indicator diagnostic system compares, in a given operation mode, a threshold value determined based on a diagnostic model created by learning from normal sensor data with a value computed based on a diagnostic model from sensor data that serves as a diagnostic target, and determines whether or not an abnormality is present.

2. The fault indicator diagnostic system according to claim 1, wherein:
the sensor data is data of a sensor configured to acquire information related to driving of a diagnostic target machine.

3. The fault indicator diagnostic system according to claim 1 or 2, wherein:
the operation mode is information for distinguishing a type of an operation state of a diagnostic target machine.

4. The fault indicator diagnostic system according to any one of claims 1 to 3, wherein:
the diagnostic model is created for each operation mode by acquiring, from the operation data table, sensor data for a period of normal operation.

5. The fault indicator diagnostic system according to any one of claims 1 to 4, wherein:
a diagnostic result storage table is created that indicates a determination result of whether or not an abnormality occurred in association with an operation mode.

6. The fault indicator diagnosis system according to any one of claims 1 to 5, wherein,
in a case that an abnormality is determined, at least information regarding an operation mode and a time is added to an abnormality data table formed only of data determined to be abnormal.

7. A fault indicator diagnostic method comprising:
a step of creating an operation sensor data table that indicates an association between sensor data and an acquisition time of the sensor data;
a step of creating an operation mode data table that indicates an association between an operation mode and an operation time in the operation mode;
a step of creating an operation data table that includes the sensor data with respect to the operation mode at a given time by merge processing the operation sensor data table and the operation mode data table; and
a step of comparing, in a given operation mode, a threshold value determined based on a diagnostic model created by learning from normal sensor data with a value computed based on a diagnostic model from sensor data serving as a diagnostic target, and determining whether or not an abnormality is present.
